(19) Europäisches Patentamt
European Patent Office
Office européen des brevets

(11) **EP 4 603 213 A1**

(12) **EUROPEAN PATENT APPLICATION**

(43) Date of publication:
**20.08.2025 Bulletin 2025/34**

(21) Application number: **24158179.2**

(22) Date of filing: **16.02.2024**

(51) International Patent Classification (IPC):
**B22F 10/22** (2021.01)    **B22F 10/25** (2021.01)
**B22F 10/322** (2021.01)    **B22F 12/20** (2021.01)
**B23K 37/00** (2025.01)    **B23K 9/04** (2006.01)
**B23K 9/16** (2006.01)

(52) Cooperative Patent Classification (CPC):
(C-Sets available)
**B23K 9/164; B23K 9/04; B23K 37/003;**
**B33Y 10/00; B33Y 30/00; B33Y 40/00;** B22F 10/25;
B22F 10/50; B22F 12/20; B22F 12/70; B33Y 50/02
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Air Products and Chemicals, Inc.
Allentown, PA 18106-5500 (US)**

(72) Inventors:
• **AMEYE, Marc**
2930 Brasschaat (BE)
• **AKUH, Maximus**
45527 Hattingen (DE)
• **ALFOLDI, Csaba**
1200 Woluve Saint Lambert (BE)

(74) Representative: **SSM Sandmair
Patentanwälte Rechtsanwalt
Partnerschaft mbB
Joseph-Wild-Straße 20
81829 München (DE)**

(54)    **METHOD AND APPARATUS FOR DIRECT ENERGY DEPOSITION OF METAL**

(57)    A method for direct energy deposition of metal, for example, for wire arc additive manufacturing (WAAM), comprises:

(f) moving a tool head (10) and/or a metal structure (1) one relative to the other so that the tool head (10) moves relative to the metal structure (1) in an advance direction (X) on a deposition path along the metal structure (1);

(g) directing energy (12) to an energy input location (6) of the metal structure (1) to create a melt-pool (7) that moves in the advance direction (X) along the deposition path;

(h) supplying a feedstock metal (11) from the tool head (10) in a discharge direction (Z) directed toward the advancing melt-pool (7) to deposit a new layer (5) of metal on the structure (1); and

(i) directing one or more cryogenic coolant jets (20; 22, 24) of cryogenic fluid with a directional component counter to the advance direction (X) towards the new layer (5) so that the cryogenic fluid impinges on the new layer (5) in a coolant impingement region (8) trailing the melt-pool (7) in the advance direction (X).

**Fig. 1**

EP 4 603 213 A1

(52) Cooperative Patent Classification (CPC): (Cont.)

C-Sets
B22F 2999/00, B22F 12/20, B22F 2202/03

## Description

## FIELD OF THE INVENTION

The invention was made as part of a project funded by the European Union's Horizon 2020 research and innovation program under grant agreement no. 862017.

The present invention relates to a method and an apparatus for the deposition of metal by direct energy deposition, and more specifically to a method and an apparatus for manufacturing or repairing a metal component. For example, wire arc additive manufacturing is a direct energy deposition process in which the invention can be advantageously implemented. The invention can also advantageously be implemented in wire arc welding, especially in multi-pass welding.

## BACKGROUND OF THE INVENTION

Wire Arc Additive Manufacturing (WAAM) is a production process used to 3D print or repair metal parts. It belongs to the Direct Energy Deposition (DED) family of additive manufacturing processes. WAAM is executed by depositing layers of metal on top of each other, until a desired 3D shape is created. It is a combination of two production processes: Gas Metal Arc Welding (GMAW) and Additive Manufacturing (AM). GMAW is a welding process used for joining metal parts using an electric arc, and additive manufacturing is the industrial term for 3D printing. The production of parts using WAAM is usually carried out by a welding robot integrated with a power source. A welding torch attached to the robot is used to melt the wire feedstock to build 3D parts.

Weld process gases are used to stabilize the arc, protect the molten weld pool and protect the wall deposit from being oxidized. Sometimes referred to as 3D printing, it enables complex and light parts, that are either too difficult or too expensive to build using traditional methods, to be fabricated. AM can also offer many other advantages like lower material usage (low buy-to-fly ratio), shorter lead times, improved mechanical performance, reverse engineering, improved productivity, hence it is opening up a totally new realm for design possibilities.

Large engineering structures like turbines, metallic bridges, moulds, industrial machinery etc. are manufactured using traditional processes like forging, casting, machining from solid blocks and which may require further welding, brazing, riveting, bolting and finishing. These processes do not readily allow for graded material properties to be developed in order to achieve a specific function like anti-corrosion or hardness. To meet the functional specifications, engineers must operate within a limited range of design options, with high "buy-to-fly" ratios and long lead times.

A major factor limiting the application of WAAM is the development of local stresses due to the thermal cycling during the process, in combination with specific metallographic features. The evolution of stresses during and after production may result in hot or cold cracking. The former may occur in the final stages of solidification, whereas cold cracking takes place at low temperatures as a result of the combined effect of stresses, certain microstructures and the presence of diffusible hydrogen. Stress/strain development due to thermal cycling was studied for multi-pass welding, showing that stresses redistribute after each pass. For WAAM, similar effects are expected, but the boundary conditions are different, in particular with respect to the restraints imposed on the deposit. Reducing the residual stresses below a critical level, where distortion will not occur, will greatly increase productivity. Cooling and heating strategies have been shown to mitigate distortion in relatively simple welding geometries, by redistributing the stresses in the manufactured component.

For example, US 2022/0008995 A1 improves the DED fabrication of layered structures by spraying coolant jets of a cryogenic liquid onto the sidewalls of the layered structure in progress while a top nozzle directs a spray of the cryogenic liquid perpendicularly onto the freshly deposited layer.

It is desirable to further increase the productivity of direct energy deposition processes.

It is an object of the present invention to provide a method and apparatus for direct energy deposition of metal with high deposition rates and low stress development.

Another object is to improve the cooling of the structure in progress.

## SUMMARY OF THE INVENTION

A basic subject of the invention is a method for direct energy deposition of metal, The method comprises:

(a) moving a tool head and/or a metal structure, one relative to the other, so that the tool head moves relative to the metal structure in an advance direction on a deposition path along the metal structure;
(b) directing energy to an energy input location of the metal structure to create a melt-pool that moves in the advance direction along the deposition path;
(c) supplying a feedstock metal from the tool head in a discharge direction directed toward the advancing melt-pool to deposit a new layer of metal on the structure; and
(d) directing one or more cryogenic coolant jets of cryogenic fluid with a directional component counter to the advance direction towards the new layer so that the cryogenic fluid impinges on the new layer in a coolant impingement region trailing the melt-pool in the advance direction.

The method is particularly advantageous in the manufacture of metal structures layer by layer, i.e. structures of metal layers deposited on top of each other. However, the method is also suitable for repairing or supplementing existing structures produced by other processes.

In a first variant of the method, the tool head is moved forward relative to the layered structure along the deposition path while the metal structure can be fixed in space. In a second variant, the structure is moved in the advance direction relative to the tool head, while the tool head can be held in a fixed position during deposition. The second variant can be used, for example, to manufacture or repair structures such as pipes or, more generally, structures whose cross-section is rotationally symmetrical or is suitable for rotation of the structure for other reasons. In a third variation, both the tool head and the structure are moved spatially and in coordination with each other, so that the coordinated movement of the tool head and the structure defines the advance direction and the deposition path. Each of the variants results in a new layer of the metal being deposited along the deposition path on the metal structure being manufactured or repaired.

Suitable DED methods include beam and arc methods. The feedstock metal can be metal powder or metal wire. Most suited are wire arc additive manufacturing processes. A specific subject of the invention is accordingly a method for the deposition of metal by wire arc additive manufacturing, in the following WAAM. In such embodiments, the tool head may be a welding head or torch, and the feedstock metal may be a so-called filler metal in wire form that is fed to the melt-pool from the tool head in the discharge direction while an arc is generated between the tip of the metal wire and the melt-pool.

Under a first aspect of the invention, the respective cryogenic coolant jet is directed towards the new layer at an acute angle of incidence to a virtual reference plane which is tangential to the new layer and perpendicular to a directional component of the discharge direction which is orthogonal to the advance direction, wherein the angle of incidence of the respective cryogenic coolant jet is smaller than 45°. A so-called splash-back of the impinging cryogenic coolant can be prevented or greatly reduced compared to conventional methods. On the other hand, the angle of incidence of the respective cryogenic coolant jet may be greater than 0° so that the respective spray has a momentum component perpendicular to the freshly deposited new layer.

The momentum of the respective cryogenic coolant jet against the advance direction may advantageously be greater than the momentum directed against the new layer and/or in the discharge direction, which reduces the risk of interference with the energy input and/or an optional shielding gas. The cryogenic fluid may be ejected with a momentum that has a directional component against the advance direction, a directional component in the discharge direction, and a transverse directional component orthogonal to these two directions. Of these three momentum components, in particular the momentum component pointing against the advance direction can be the largest and/or the momentum component pointing in the discharge direction can be the smallest. The cryogenic fluid may be ejected in a direction which is predominantly against the advance direction, so that the momentum of the respective cryogenic coolant jet points predominantly against the advance direction away from the energy input location.

In particular, the angle of incidence of the respective cryogenic coolant jet may be at most 30° or at most 25°. Expediently, the angle of incidence of the respective cryogenic coolant jet may be greater than 5° or greater than 7° and even more expediently, it may be 10° or greater. An advantageous range is 15° to 30°, including the limits.

The angle of incidence of the respective cryogenic coolant jet may be measured as the angle at which a central axis of the respective cryogenic coolant jet intersects the reference plane. The local advance direction, i.e., the advance direction at the energy input location, extends in the reference plane. The discharge direction may be oblique or preferably orthogonal to the advance direction. If the discharge direction is orthogonal to the advance direction, the directional component of the discharge direction and the discharge direction are identical. For clarification purposes only, it should be noted that the angle of incidence of the respective cryogenic coolant jet may be measured in a measurement plane which is perpendicular to the reference plane and contains the central axis of the respective cryogenic coolant jet.

The reference plane, as understood by the invention, may have any orientation in space. It may be regarded to represent a free surface of the freshly deposited new layer, expediently the top surface of the new layer. In operation, the metal may be deposited on a horizontal top surface of the metal structure, which is advantageous for high productivity. The reference plane may accordingly be a horizontal plane. In principle, however, the top surface on which the new layer is deposited and/or the reference plane may have any other orientation in space. In operation, the tool head may point with its discharge direction perpendicular to the top surface of the metal structure, as preferred. In particular, the deposition path may be horizontal and/or the discharge direction may be vertical. However, the tool head may instead assume an inclined position during deposition, with the discharge end of the tool head facing the new layer and pointing, for example, in the feed direction, so that the discharge end of the tool head pushes forward while depositing the feedstock metal.

According to a second aspect of the invention, the one or more cryogenic coolant jets comprise a first cryogenic coolant jet of cryogenic fluid and a second cryogenic coolant jet of cryogenic fluid that are combined to mix and form a combined cryogenic coolant jet that trails the melt-pool in the advance direction. The first cryogenic coolant jet and the second cryogenic coolant jet may be aligned so that they combine and form the combined cryogenic coolant jet before impingement on the new layer. In such embodiments, the combined cryogenic coolant jet is directed at the new layer at an angle of incidence as described above. In even more advantageous embodiments, the first cryogenic coolant jet and the second cryogenic coolant jet may be aligned so that they combine when they impinge on the new layer. In such embodiments, the first cryogenic coolant jet and the second cryogenic coolant jet are directed at the new layer each at an angle of incidence as described above. The merging of two or more cryogenic coolant jets counteracts fanning out so that a narrow combined cryogenic coolant jet can be created. It also assists in aligning the direction of the cryogenic fluid with the deposition path of the new layer.

The first cryogenic coolant jet and the second cryogenic coolant jet, and optionally one or more further cryogenic coolant jets, may be directed with a directional component to each other as seen in a top view of the freshly deposited new layer and/or as seen in a side view. A "top view" is a view plane orthogonal to the direction in which the metal structure grows by deposition of the new layer, and a "side view" is a view orthogonal to the top view. The top view and/or the side view may extend parallel to the advance direction. The top view plane can have any orientation in space. In preferred embodiments, however, the top view plane is a horizontal plane.

In embodiments in which a combined cryogenic coolant jet is formed, at least one of the first cryogenic coolant jet and second cryogenic coolant jet is directed towards the new layer at a crossing angle to the advance direction. The other cryogenic coolant jet(s) can be directed at the new layer in a direction parallel to the advance direction. Advantageously, the first cryogenic coolant jet is directed towards the new layer at a first crossing angle to the advance direction and the second cryogenic coolant jet is directed towards the new layer at a second crossing angle to the advance direction, i.e., both cryogenic coolant jets are inclined to the advance direction. The crossing angle is an angle included by a central axis of the respective cryogenic coolant jet and an axis representative for the advance direction. The respective crossing angle may be measured in a measurement plane spanned by a central axis of the first cryogenic coolant jet and a central axis of the second cryogenic coolant jet. The advance direction is orthogonally parallel projected into this measurement plane. The crossing angle is the angle that the orthogonal parallel projection of the advance direction in this plane includes with the center axis of the respective cryogenic coolant jet. As a substitute, the respective crossing angle may be measured in the top view of the new layer. As another substitute, the central axis of the respective cryogenic coolant jet may be projected orthogonally parallel into the reference plane and the crossing angle measured in the reference plane.

A central axis of the first cryogenic coolant jet and a central axis of the second cryogenic coolant jet may include an angle greater than 20° or greater than 30° and/or may include an angle less than 120° or of at most 90° in the top view and/or in the reference plane and/or in the measurement plane spanned by a central axis of the first cryogenic coolant jet and a central axis of the second cryogenic coolant jet. The included angle is the sum of the first crossing angle and the second crossing angle if both cryogenic coolant jets are inclined to the advance direction.

The first crossing angle and the second crossing angle can differ from each other. However, in expedient embodiments they are equal or differ from one another by at most 5° or at most 3°.

The respective cryogenic coolant jet may be ejected from an area which is close to the melt pool with respect to the advance direction and/or with respect to the discharge direction. The one or more cryogenic coolant jets or a combined cryogenic coolant jet formed by combining two or more cryogenic coolant jets may strike the new layer at a trailing distance d from the energy input location. The trailing distance d may be measured in the advance direction between the energy input location and an impingement location in the impingement region where a central axis of the respective cryogenic coolant jet or a central axis of the combined cryogenic coolant jet meets the freshly deposited layer. The impingement location may be close to the energy input location, so that cryogenic cooling of the hot metal starts early. Cryogenic cooling of the hot metal may start as early as possible while interference with the melt-pool and/or an optional shielding gas should be avoided as far as possible. The trailing distance d may advantageously fulfill at least one of the following relations: d < 120 mm or d < 80 mm or d < 60 mm.

According to the invention, a trail of a shower of a cryogenic coolant is sprayed on the freshly deposited layer, to increase the cooling speed. The orientation of the cryogenic coolant nozzle(s) and subsequently of the cryogenic coolant jet according to the invention can avoid the formation of a vortex or negative pressure wave that could suck in an optionally used shielding gas and thus create porosities in the deposited layer. The cryogenic coolant jet can therefore be positioned close to the energy input location, for example, close to the arc of a WAAM process, to achieve higher cooling efficiency and thus maximum cooling effect on the freshly deposited layer and also on the layer(s) immediately below.

The combination of two or more cryogenic coolant jets forming a combined cryogenic coolant jet enables cooling with high flow rates of cryogenic fluid, since the combined cryogenic coolant jet can be kept narrow with respect to its extent transverse to the advance direction. More of the ejected fluid comes and/or stays in heat transfer contact with the metal. The heat transfer per unit amount of fluid used can be intensified. Spraying the cryogenic fluid at an acute angle of incidence smaller than 45° towards the freshly deposited layer helps to decouple the cryogenic coolant jet from the energy input location and, if a shielding gas is used, from the shielding gas. The coolant jet can virtually sweep over the new layer. The contact distance over which the cryogenic fluid absorbs heat from the new layer can be extended. The heat transfer per unit amount of fluid used can accordingly be intensified. Both aspects are beneficial in their own right but may also be advantageously combined.

A further subject of the invention is an apparatus for direct energy deposition of metal, such as for a WAAM process. The apparatus comprises:

(a) a tool head having a discharge end and configured to supply a feedstock metal at the discharge end in a discharge direction pointing to a reference plane;
(b) an energy source configured to generate an arc or energy beam to melt the feedstock metal from the tool head; and
(c) one or more cryogenic coolant nozzles configured to generate a respective cryogenic coolant jet of cryogenic fluid and coupled to the tool head so that the respective cryogenic coolant nozzle moves together with the tool head when the tool head is moved in an advance direction to deposit the feedstock metal.

The respective cryogenic coolant nozzle is directed against the advance direction and points under an acute angle of incidence greater than 0° to the reference plane when the tool head is oriented such that the discharge direction is orthogonal to the reference plane or points obliquely to the reference plane, as may be the case, for example, if the tool head pushes forward during operation so that the discharge direction also has a directional component in the advance direction.

Under the first aspect, the respective cryogenic coolant nozzle points under an acute angle of incidence of less than 45° to the reference plane. Angles of incidence up to 30° or up to 25° are particularly advantageous. A lower limit for the angle of incidence can advantageously be 5° or 10°. A most preferred range is 15° to 30°, including the limits.

The respective cryogenic coolant nozzle comprises a nozzle outlet, which can advantageously be located not further than 40 mm or 30 mm or 20 mm or 10 mm from the discharge end of the tool head measured against the discharge direction. The respective nozzle outlet may even be located at the same level as the discharge end of the tool head or in the discharge direction lower than the discharge end of the tool head.

Under the second aspect, the apparatus comprises, as the one or more cryogenic coolant nozzles, a first cryogenic coolant nozzle configured to generate a first cryogenic coolant jet of a cryogenic fluid and a second cryogenic coolant nozzle configured to generate a second cryogenic coolant jet of a cryogenic fluid. The cryogenic coolant nozzles may be coupled to the tool head so that they move together with the tool head when the tool head is moved in an advance direction to deposit the feedstock metal. The cryogenic coolant nozzles may be arranged to direct the cryogenic coolant jets counter the advance direction and towards each other as seen in a top view of the reference plane to combine the first cryogenic coolant jet and the second cryogenic coolant jet and form a combined cryogenic coolant jet.

The first cryogenic coolant nozzle may be disposed to receive a first cryogenic fluid and the second cryogenic coolant nozzle may be disposed to receive a second cryogenic fluid different from the first cryogenic fluid. However, preferred are arrangements in which the cryogenic fluid is the same for both nozzles and any optionally provided further cryogenic coolant nozzle. The first cryogenic coolant nozzle may be disposed to receive cryogenic fluid from a first cryogenic fluid source and the second cryogenic coolant nozzle may be disposed to receive cryogenic fluid from a second cryogenic fluid source different from the first cryogenic fluid source. However, preferred are arrangements in which the cryogenic coolant nozzles and any optionally provided further cryogenic coolant nozzle receive the cryogenic fluid from the same source.

A still further subject is a system for direct energy deposition of metal, for example, for wire arc additive manufacturing (WAAM), The system comprises:

(a) an actuator, e.g. a robotic arm, movable in an advance direction;
(b) a tool head mounted on the actuator and configured to discharge a feedstock metal at a tool head discharge end in a discharge direction pointing normal to a reference plane;
(c) an energy source mounted on the actuator and configured to generate an arc or energy beam to melt the feedstock metal from the tool head; and
(d) one or more cryogenic coolant nozzles configured to generate a cryogenic coolant jet of the cryogenic fluid;
(e) wherein the respective cryogenic coolant nozzle is coupled to the tool head so that it moves together with the tool head when the actuator is moved in the advance direction and directs the cryogenic coolant jet counter to the advance direction.

The actuator is configured to orient the tool head such that the discharge end of the tool head points to the reference plane and the discharge direction is orthogonal to the reference plane, as preferred, or oblique to the reference plane. In this orientation of the tool head, the respective cryogenic coolant nozzle may point to the reference plane at an acute angle of incidence greater than 0°.

Under the first aspect, the respective cryogenic coolant nozzle points under an acute angle of incidence of less than 45° to the reference plane when the tool head is oriented as described above. Angles of incidence up to 30° or up to 25° are particularly advantageous. A lower limit for the angle of incidence can advantageously be 5° or 10°. A most preferred range is 15° to 30°, including the limits.

Under the second aspect, the system comprises, as the one or more cryogenic coolant nozzles, a first cryogenic coolant nozzle configured to generate a first cryogenic coolant jet of a cryogenic fluid and a second cryogenic coolant nozzle configured to generate a second cryogenic coolant jet of a cryogenic fluid. The cryogenic coolant nozzles may be coupled to the tool head so that they move together with the tool head when the actuator moves the tool head in an advance direction to deposit the feedstock metal. The cryogenic coolant nozzles may be arranged to direct the cryogenic coolant jets counter the advance direction and towards each other as seen in a top view of the reference plane to combine the first cryogenic coolant jet and the second cryogenic coolant jet and form a combined cryogenic coolant jet.

The respective cryogenic coolant nozzle may under both aspects be mounted on the tool head and thereby coupled to the tool head. Fixation relative to the tool head via a rigid nozzle mount structure is a preferred mounting option. In principle, however, the respective cryogenic coolant nozzle for executing movements together with the tool head can also be indirectly connected to the tool head, for example via a common connection structure for connecting the tool head and the respective cryogenic coolant nozzle to an actuator, such as a robot arm. Furthermore, it is advantageous to attach the respective cryogenic coolant nozzle to the tool head or to the actuator in such a way that the nozzle outlet is located near the discharge end of the tool head.

The apparatus under the first aspect may exhibit one or more or each of the features disclosed under the second aspect, and the apparatus under the second aspect may exhibit one or more or each of the features disclosed under the first aspect. Also, the system may exhibit one or more or each of the features disclosed under the first aspect and/or under the second aspect.

In the apparatus and system, the respective angle may be measured between a central longitudinal axis of the respective cryogenic coolant nozzle and a plane or direction to which the respective angle is referenced, such as the reference plane, the advance direction, and the discharge direction. In particular, the central longitudinal axis of a cryogenic coolant nozzle can replace the central axis of the cryogenic coolant jet that can be generated by means of the respective cryogenic coolant nozzle.

In the following, specific aspects of the method and system will be outlined including, but not limited, the first and second aspect outlined above. The reference signs and expressions set in parentheses are referring to an example embodiment explained further below with reference to figures. The reference signs and expressions are, however, only illustrative and do not limit the aspect to any specific component or feature of the example embodiment. The aspects can be formulated as claims in which the reference signs and expressions set in parentheses are omitted or replaced by appropriate others.

Aspect 1# A method for direct energy deposition of metal, for example, for wire arc additive manufacturing (WAAM), the method comprising:

(a) moving a tool head (10) and/or a metal structure (1) one relative to the other so that the tool head (10) moves relative to the metal structure (1) in an advance direction (X) on a deposition path along the metal structure (1);
(b) directing energy (12) to an energy input location (6) of the metal structure (1) to create a melt-pool (7) that moves in the advance direction (X) along the deposition path;
(c) supplying a feedstock metal (11) from the tool head (10) in a discharge direction (Z) directed toward the advancing melt-pool (7) to deposit a new layer (5) of metal on the structure (1); and
(d) directing one or more cryogenic coolant jets (20; 22, 24) of cryogenic fluid with a directional component counter to the advance direction (X) towards the new layer (5) so that the cryogenic fluid impinges on the new layer (5) in a coolant impingement region (8) trailing the melt-pool (7) in the advance direction (X).

Aspect 2# The method according to aspect 1, wherein the respective cryogenic coolant jet (20; 22, 24) is directed towards the new layer (5) at an angle of incidence ($\alpha$; $\alpha$1, $\alpha$2) to a virtual reference plane (X-Y) which is tangential to the new layer (5) and perpendicular to a directional component of the discharge direction (Z) which is orthogonal to the advance direction (X), wherein the respective angle of incidence ($\alpha$; $\alpha$1, $\alpha$2) is smaller than 45°.

Aspect 3# The method according to the preceding aspect, wherein the angle of incidence ($\alpha$; $\alpha$1, $\alpha$2) of the respective cryogenic coolant jet (20; 22, 24) is at most 30° or at most 25°.

Aspect 4# The method according to aspect 2 or aspect 3, wherein the angle of incidence ($\alpha$; $\alpha$1, $\alpha$2) of the respective cryogenic coolant jet (20; 22, 24) is greater than 5° or is at least 10° or at least 15°.

Aspect 5# The method according to any one of the aspects 2 to 4, wherein the advance direction (X) extends in a virtual measurement plane (X-Z) orthogonal to the reference plane (X-Y) and the respective cryogenic coolant jet (20; 22, 24) has a central axis which is projected orthogonally parallel into the measurement plane (X-Z), wherein the orthogonal parallel projection of the central axis of the respective cryogenic coolant jet (20; 22, 24) includes an angle with the feed direction (X) which is smaller than 45° or smaller than 40° and may advantageously be greater than 5° or greater than 10°.

Aspect 6# The method according to any one of the preceding aspects, wherein the respective cryogenic coolant jet (20; 22, 24) impinges on the new layer (5) in the coolant impingement region (8) at a distance, d, from the energy input location (6), wherein d < 120 mm or d < 80 mm or d < 60 mm.

Aspect 7# The method according to any one of the preceding aspects, wherein the respective cryogenic coolant jet (20; 22, 24) covers a distance of at most 80 mm or at most 60 mm from a nozzle outlet of a cryogenic coolant nozzle (21, 23) until it impinges on the new metal layer(5).

Aspect 8# The method according to any one of the preceding aspects, wherein the one or more cryogenic coolant jets comprise a first cryogenic coolant jet (22) of cryogenic fluid and a second cryogenic coolant jet (24) of cryogenic fluid each directed counter the advance direction (X), and wherein the first cryogenic coolant jet (22) and the second cryogenic coolant jet (24) are directed to each other and combine to form a combined cryogenic coolant jet (20) which is in heat transfer contact with the new layer (5).

Aspect 9# The method according to any one of the preceding aspects, wherein the one or more cryogenic coolant jets comprise a first cryogenic coolant jet (22) of cryogenic fluid and a second cryogenic coolant jet (24) of cryogenic fluid each directed counter the advance direction (X), and wherein at least one of the first cryogenic coolant jet (22) and the second cryogenic coolant jet (24) has a directional component in a direction (Y) transverse to the advance direction (X) such that the first cryogenic coolant jet (22) and the second cryogenic coolant jet (24) are directed to each other and combine to form a combined cryogenic coolant jet (20) which is in heat transfer contact with the new layer (5).

Aspect 10# The method according to the preceding aspect, wherein the first cryogenic coolant jet (22) and the second cryogenic coolant jet (24) are each directed towards the new layer (5) at least with a directional component of their respective momentum counter the advance direction (X).

Aspect 11# The method according to any one of the preceding aspects, wherein the one or more cryogenic coolant jets (20; 22, 24) comprise a first cryogenic coolant jet (22) of cryogenic fluid and a second cryogenic coolant jet (24) of cryogenic fluid each directed counter the advance direction (X) and in a top view of the new layer (5) with a directional component to each other to combine and form a combined cryogenic coolant jet (20).

Aspect 12# The method according to any one of the aspects 8 to 11, wherein at least one of the first cryogenic coolant jet (22) and the second cryogenic coolant jet (24) is directed towards the new layer (5) with a directional component of its momentum transverse to the advance direction (X) in a top view of the new layer (5).

Aspect 13# The method according to any one of the aspects 8 to 12, wherein the first cryogenic coolant jet (22) and the second cryogenic coolant jet (24) are directed towards the new layer (5) each with a directional component of its momentum transverse to the advance direction (X) in a top view of the new layer (5).

Aspect 14# The method according to any one of the aspects 8 to 13, wherein a central axis of the first cryogenic coolant jet (22) and a central axis of the second cryogenic coolant jet (24) intersect or cross within a virtual cube having side walls of side length, w, parallel to the reference plane (X-Y) and a cube center (C) located in the reference plane (X-Y) midway between an outer left side rim (L) and an outer right side rim (R) of the new layer (5) in a top view of the reference plane (X-Y), and wherein the side length, w, of the virtual cube corresponds to a width of the new layer (5) measured from the outer left side rim (L) to the outer right side rim (R).

Aspect 15# The method according to any one of the aspects 8 to 14, wherein the first cryogenic coolant jet (22) and the second cryogenic coolant jet (24) meet with more than half of a cross-sectional area of the first cryogenic coolant jet (22) and/or with more than half of a cross-sectional area of the second cryogenic coolant jet (24).

Aspect 16# The method according to any one of the aspects 8 to 15, wherein the first cryogenic coolant jet (22) and the second cryogenic coolant jet (24) include an angle ($\beta1 + \beta2$) greater than 20° or greater than 30° in a top view of the new layer (5) and/or in a virtual measurement plane spanned by the first cryogenic coolant jet (22) and the second cryogenic coolant jet (24).

Aspect 17# The method according to any one of the aspects 8 to 16, wherein the first cryogenic coolant jet (22) and the second cryogenic coolant jet (24) include an angle ($\beta1 + \beta2$) less than 120° or of at most 90° in a top view of the new layer (5) and/or in a virtual measurement plane spanned by the first cryogenic coolant jet (22) and the second cryogenic coolant jet (24).

Aspect 18# The method according to any one of the aspects 8 to 17, wherein the first cryogenic coolant jet (22) is directed towards the new layer (5) at a first crossing angle ($\beta1$) to the advance direction (X) and/or wherein the second cryogenic coolant jet (24) is directed towards the new layer (5) at a second crossing angle ($\beta2$) to the advance direction (X), wherein the respective crossing angle ($\beta1$, $\beta2$) is measured in a top view of the new layer (5) and/or in a virtual measurement plane spanned by the first cryogenic coolant jet (22) and the second cryogenic coolant jet (24) and is measured in this measurement plane as the angle included by a central axis of the respective cryogenic coolant jet (22, 24) and an orthogonal parallel projection (X') of the advance direction (X),

Aspect 19# The method according to the preceding aspect, wherein the first crossing angle ($\beta1$) and/or the second crossing angle ($\beta2$) is/are less than 60° or less than 50°.

Aspect 20# The method according to the aspect 18 or aspect 19, wherein the first crossing angle ($\beta1$) and/or the second crossing angle ($\beta2$) is/are greater than 10° or greater than 20°.

Aspect 21# The method according to any one of the aspects 18 to 20, wherein the respective crossing angle ($\beta1$, $\beta2$) is 35° ± 15°.

Aspect 22# The method according to any one of the aspects 18 to 21, wherein the first crossing angle ($\beta1$) and the second crossing angle ($\beta2$) are equal or differ from one another by at most 5° or at most 3°.

Aspect 23# The method according to any one of the aspects 18 to 22, wherein the first crossing angle ($\beta1$) and the second crossing angle ($\beta2$) differ from one another by at least 3° or at least 5°.

Aspect 24# The method according to any one of the aspects 8 to 23, wherein the first cryogenic coolant jet (22) and the second cryogenic coolant jet (24) are aligned so that they combine when they impinge on the new layer (5) or combine so close to the new layer (5) that the resulting combined cryogenic coolant jet (20) is formed immediately in contact with the new layer (5).

Aspect 25# The method according to any one of the aspects 8 to 24, wherein the first cryogenic coolant jet (22) and the second cryogenic coolant jet (24) are aligned so that their central axes intersect when they reach the new layer (5) or intersect so close to the new layer (5) that the resulting combined cryogenic coolant jet (20) is formed immediately in contact with the new layer (5).

Aspect 26# The method according to any one of the aspects 8 to 25 in combination with aspect 2, wherein the first cryogenic coolant jet (22) is directed towards the new layer (5) at a first angle of incidence, $\alpha1$, to the reference plane (X-Y) and the second cryogenic coolant jet (24) is directed towards the new layer (5) at a second angle of incidence, $\alpha2$, to the reference plane (X-Y), wherein $\alpha1$ and $\alpha2$ are both less than 45° or at most 30° or at most 25°.

Aspect 27# The method according to any one of the aspects 8 to 26, wherein the first cryogenic coolant jet (22) is directed towards the new layer (5) at a first angle of incidence, $\alpha1$, to a virtual reference plane (X-Y) which is tangential to the new layer (5) and perpendicular to a directional component of the discharge direction (Z) which is orthogonal to the advance direction (X), and the second cryogenic coolant jet (24) is directed towards the new layer (5) at a second angle of incidence, $\alpha2$, to the reference plane (X-Y), wherein $\alpha1$ and $\alpha2$ are equal or differ from one another by at most 5° or at most 3°.

Aspect 28# The method according to any one of the aspects 8 to 27 in combination with aspect 2, wherein the first cryogenic coolant jet (22) is directed towards the new layer (5) at a first angle of incidence, $\alpha1$, to a virtual reference plane (X-Y) which is tangential to the new layer (5) and perpendicular to a directional component of the discharge direction (Z) which is orthogonal to the advance direction (X), and the second cryogenic coolant jet (24) is directed towards the new layer (5) at a second angle of incidence, $\alpha2$, to the reference plane (X-Y), wherein $\alpha1 \neq \alpha2$.

Aspect 29# The method according to any one of the preceding aspects, wherein a shielding gas (13), such as, for example, carbon dioxide ($CO_2$), oxygen ($O_2$), helium (He), and/or in particular argon (Ar), is applied around and/or on the melt-pool (7) to shield the melt-pool (7) from the surrounding environment.

Aspect 30# The method according to the preceding aspect, wherein the shielding gas (13) forms a shielding gas curtain (13) around the melt-pool (7) and the cryogenic coolant jet (20) is directed counter the advance direction (X) into the impingement region (8) trailing the shielding gas curtain (13).

Aspect 31# The method according to aspect 29 or aspect 30, wherein the respective cryogenic coolant jet (20; 22, 24) is directed onto the new layer (5) at a distance smaller than 90 mm or smaller than 70 mm or smaller than 50 mm from the shielding gas (13) or shielding gas curtain (13).

Aspect 32# The method according to any one of the preceding aspects, wherein the method is wire arc additive manufacturing (WAAM) and the tool head (10) is a wire arc welding torch that directs the energy (12) that melts the feedstock metal (11) towards the energy input location (6) in the form of an electric arc.

Aspect 33# The method according to any one of the preceding aspects, wherein the tool head (10), an energy source disposed to direct the energy to the energy input location (6) and one or more cryogenic coolant nozzles (21, 23) for directing the cryogenic coolant jet (20) onto the new layer (5) are mounted on an actuator, and wherein the actuator is moved in the advance direction (X) to deposit the new layer (5) and reversed to deposit a further layer on top of the new layer (4) along the deposition path counter to the advance direction (X) for depositing the new layer (5).

Aspect 34# An apparatus for direct energy deposition of metal, for example, for wire arc additive manufacturing (WAAM), the apparatus comprising:

(a) a tool head (10) having a discharge end and configured to supply a feedstock metal (11) at the discharge end in a discharge direction (Z);
(b) an energy source configured to generate an arc (12) or energy beam to melt the feedstock metal (11) from the tool head (10); and
(c) one or more cryogenic coolant nozzles (21, 23) configured to generate a respective cryogenic coolant jet (22, 24) of cryogenic fluid and coupled to the tool head (10) so that the respective cryogenic coolant nozzle (21, 23) moves together with the tool head (10) when the tool head (10) is moved in an advance direction (X) to deposit the feedstock metal (11);
(d) wherein the respective cryogenic coolant nozzle (21, 23) is directed with a directional component counter to the advance direction (X) and
(e) points under an acute angle of incidence ($\alpha1$, $\alpha2$) to a virtual reference plane (X-Y) when the tool head (10) is oriented such that the discharge direction (Z) is orthogonal to the reference plane (X-Y) or points in the advance direction (X) and to the reference plane (X-Y).

Aspect 35# The apparatus according to the preceding aspect, wherein the respective cryogenic coolant nozzle (21, 23) points under an acute angle of incidence ($\alpha 1$, $\alpha 2$) greater than 0° and less than 45° to the reference plane (X-Y).

Aspect 35# The apparatus according to the preceding aspect, wherein the respective cryogenic coolant nozzle (21, 23) points under an acute angle of incidence ($\alpha 1$, $\alpha 2$) greater than 0° and less than 45° to the reference plane (X-Y).

Aspect 36# The apparatus according to aspect 34 or aspect 35, wherein the angle of incidence ($\alpha 1$, $\alpha 2$) of the respective cryogenic coolant nozzle (21, 23) is at most 30° or at most 25°.

Aspect 37# The apparatus according to any one of the aspects 34 to 36, wherein the angle of incidence ($\alpha 1$, $\alpha 2$) of the respective cryogenic coolant nozzle (21, 23) is greater than 5° or is at least 10°.

Aspect 38# The apparatus according to any one of the aspects 34 to 37, wherein a nozzle outlet of the respective cryogenic coolant nozzle (21, 23) is located at or in the discharge direction (Z) lower than the discharge end of the tool head (10) or is located at a level opposite to the discharge direction (Z) of at most 40 mm or at most 30 mm or at most 20 mm or at most 10 mm from the discharge end of the tool head (10).

Aspect 39# The apparatus according to any one of the aspects 34 to 38, comprising a nozzle mount (30, 40) connected to the tool head (10) and holding the respective cryogenic coolant nozzle (21, 23) in a defined position and orientation relative to the tool head (10).

Aspect 40# The apparatus according to the preceding aspect, wherein the nozzle mount (30, 40) is mounted on the tool head (10).

Aspect 41# The apparatus according to any one of the aspects 34 to 40, comprising a shielding gas discharger, as for example a shroud, configured to direct a shielding gas (13) at least essentially in the discharge direction (Z) to flood a melt-pool (7) with the shielding gas (13).

Aspect 42# The apparatus according to any one of the aspects 34 to 41, comprising a barrier structure (40) coupled to the tool head (10) so that it moves together with the tool head (10) when the tool head (10) is moved in the advance direction (X), wherein the barrier structure (40) extends below the respective cryogenic coolant nozzle (21, 23) with respect to the discharge direction (Z) and/or between respective cryogenic coolant nozzles (21, 23) to provide a physical barrier between the cryogenic coolant jet (22, 24) of the respective cryogenic coolant nozzle (21, 23) and a shielding gas, if the tool head (10) comprises a shielding gas discharger, and/or between the cryogenic coolant jet (22, 24) of the respective cryogenic coolant nozzle (21, 23) and the discharge end of the tool head (10).

Aspect 43# The apparatus according to the preceding aspect in combination with aspect 39, wherein the barrier structure (40) is part of the nozzle mount (40).

Aspect 44# The apparatus according to any one of the aspects 34 to 43, wherein the one or more cryogenic coolant nozzles (21, 23) comprise a first cryogenic coolant nozzle (21) configured to generate a first cryogenic coolant jet (22) of a cryogenic fluid and a second cryogenic coolant nozzle (23) configured to generate a second cryogenic coolant jet (24) of a cryogenic fluid; and wherein the cryogenic coolant nozzles (21, 23) are arranged to direct the cryogenic coolant jets (22, 24) counter the advance direction (X) and towards each other, preferably in a top view of the reference plane (X-Y), to combine the first cryogenic coolant jet (22) and the second cryogenic coolant jet (24) and form a combined cryogenic coolant jet (20).

Aspect 45# The apparatus according to the preceding aspect, wherein the first cryogenic coolant nozzle (21) is disposed to the right and the second cryogenic coolant nozzle (23) is disposed to the left of a virtual measurement plane (X-Z) which is spanned by the advance direction (X) and the discharge direction (Z) and extends through the tool head (10).

Aspect 46# The apparatus according to aspect 44 or aspect 45, comprising:

- a first conduit for connecting the first cryogenic coolant nozzle (21) to a cryogenic fluid source and comprising a first conduit end section (28) which extends from the first cryogenic coolant nozzle (21), and
- a second conduit for connecting the second cryogenic coolant nozzle (23) to a cryogenic fluid source and comprising a second conduit end section (29) which extends from the second cryogenic coolant nozzle (23),
- wherein the first cryogenic coolant nozzle (21) and/or the first conduit end section (28) is/are disposed to the right of the tool head (10),
- and wherein the second cryogenic coolant nozzle (23) and/or the second conduit end section (29) is/are disposed to the left of the tool head (10).

Aspect 47# The apparatus according to any one of the aspects 44 to 46, wherein the first cryogenic coolant nozzle (21) and the second cryogenic coolant nozzle (23) are disposed to eject the respective cryogenic coolant jet (22, 23), measured against the discharge direction (Z), not further than 40 mm or 30 mm or 20 mm from the discharge end of the tool head (10).

Aspect 48# The apparatus according to any one of the aspects 44 to 47, wherein the first cryogenic coolant nozzle (21) and the second cryogenic coolant nozzle (23) are disposed to eject the respective cryogenic coolant jet (22, 23), measured in the advance direction (X), not further than 70 mm or 60 mm or 50 mm from the discharge end of the tool head (10).

Aspect 49# The apparatus according to any one of the aspects 44 to 48, wherein the first cryogenic coolant nozzle (21) is pointing with a first angle of incidence (α1) towards the reference plane (X-Y) and the second cryogenic coolant nozzle (23) is pointing with a second angle of incidence (α2) towards the reference plane (X-Y), wherein the respective angle of incidence (α1, α2) is less than 45° or is at most 30° or at most 25°.

Aspect 50# The apparatus according to any one of the aspects 44 to 49, wherein at least one of the first cryogenic coolant nozzle (21) and the second the second cryogenic coolant nozzle (23) is directed towards the reference plane (X-Y) with a directional component transverse to the advance direction (X) in the top view of the reference plane (X-Y).

Aspect 51# The apparatus according to any one of the aspects 44 to 50, wherein the first cryogenic coolant nozzle (21) and the second the second cryogenic coolant nozzle (23) are directed towards the reference plane (X-Y) each with a directional component transverse to the advance direction (X) in the top view of the reference plane (X-Y).

Aspect 52# The apparatus according to any one of the aspects 44 to 51, wherein a central axis (22) of the first cryogenic coolant nozzle (21) and a central axis (24) of the second cryogenic coolant nozzle (23) include an angle (β1 + β2) greater than 20° or greater than 30° in the top view and/or in a virtual measurement plane spanned by a central axis of the first cryogenic coolant nozzle (21) and a central axis of the second cryogenic coolant nozzle (23).

Aspect 53# The apparatus according to any one of the aspects 44 to 52, wherein a central axis (22) of the first cryogenic coolant nozzle (21) and a central axis (24) of the second cryogenic coolant nozzle (23) include an angle (β1 + β2) less than 120° or of at most 90° in the top view and/or in a virtual measurement plane spanned by a central axis of the first cryogenic coolant nozzle (21) and a central axis of the second cryogenic coolant nozzle (23).

Aspect 54# The apparatus according to any one of the aspects 44 to 53, wherein a central axis of the first cryogenic coolant nozzle (21) and a central axis of the second cryogenic coolant nozzle (23) intersect or cross within a virtual cube having side walls of side length, w, parallel to the reference plane (X-Y) and a cube center (C) located on the intersection of the reference plane (X-Y) and a virtual plane (X-Z) that is spanned by the advance direction (X) and the discharge direction (Z) and extends through a central region of the tool head (10), and wherein w ≤ 20 mm or w ≤ 10 mm.

Aspect 55# The apparatus according to any one of the aspects 44 to 54, wherein the first cryogenic coolant nozzle (21) points at a first crossing angle (β1) to the advance direction (X) and/or the second cryogenic coolant nozzle (23) points at a second crossing angle (α2) to the advance direction (X), wherein the respective crossing angle (β1, β2) is measured in a top view of the reference plane (X-Y) and/or a virtual measurement plane spanned by a central axis of the first cryogenic coolant nozzle (21) and a central axis of the second cryogenic coolant nozzle (23) and is measured in this measurement plane as the angle included by the central axis of the respective cryogenic coolant nozzle (21, 23) and an orthogonal parallel projection (X') of the advance direction (X),

Aspect 56# The apparatus according to the preceding aspect, wherein the first crossing angle (β1) and/or the second crossing angle (β2) is/are less than 60° or less than 50°.

Aspect 57# The apparatus according to aspect 55 or aspect 56, wherein the first crossing angle (β1) and/or the second crossing angle (β2) is/are greater than 10° or greater than 20°.

Aspect 58# The apparatus according to any one of the aspects 55 to 57, wherein the respective crossing angle (β1, β2) is 35° ± 10°.

Aspect 59# The apparatus according to any one of the aspects 55 to 58, wherein the first crossing angle (β1) and the second crossing angle (β2) are equal or differ from one another by at most 5° or at most 3°.

Aspect 60# The apparatus according to any one of the aspects 55 to 59, wherein the first crossing angle (β1) and the second crossing angle (β2) differ from one another by at least 3° or at least 5°.

Aspect 61# A system for direct energy deposition of metal, for example, for wire arc additive manufacturing (WAAM), the system comprising:

(a) an actuator (e.g. robotic arm) movable in an advance direction (X);
(b) a tool head (10) mounted on the actuator and configured to discharge a feedstock metal (11) in a discharge direction (Z) pointing to a virtual reference plane (X-Y);
(c) an energy source mounted on the actuator and configured to generate an arc (12) or energy beam to melt the feedstock metal (11) from the tool head (10); and
(d) one or more cryogenic coolant nozzles (21, 23) configured to generate a cryogenic coolant jet (20) of the cryogenic fluid;
(e) wherein the respective cryogenic coolant nozzle (21, 23) is coupled to the tool head (10) so that it moves together with the tool head (10) when the actuator is moved in the advance direction (X) and
(f) directs the cryogenic coolant jet (20) counter to the advance direction (X) and points under an acute angle of incidence (α1, α2) to the reference plane (X-Y) when the tool head (10) is oriented such that the discharge direction (Z) is orthogonal to the reference plane (X-Y) or points in the advance direction (X) and to the reference plane (X-Y).

Aspect 62# The system according to the preceding aspect, wherein the respective cryogenic coolant nozzle (21, 23) is coupled to the tool head (10) so that it is pointing with an angle of incidence ($\alpha 1$, $\alpha 2$) of less than 45° to the reference plane (X-Y).

Aspect 63# The system according to aspect 61 or aspect 62, wherein the tool head (10), the energy source and the one or more cryogenic coolant nozzles (21, 23) are formed by the apparatus of any one of the aspects 32 to 57.

Aspect 64# The method and/or the apparatus and/or the system of any one of the preceding claims, wherein the cryogenic fluid is a cryogenic liquid or a cryogenic liquid-gas mixture comprising one or more liquefied gases, such as one or more of helium (He), argon (Ar), oxygen ($O_2$), and in particular nitrogen (N).

Aspect 65# The method and/or the apparatus and/or the system of any one of the preceding claims, wherein the respective cryogenic coolant jet (20; 22, 24) is a spray jet and the respective cryogenic coolant nozzle (21, 23) is a spray nozzle configured to receive a cryogenic liquid or cryogenic liquid-gas mixture and eject a cryogenic liquid jet or cryogenic spray jet.

Aspect 66# The method and/or the apparatus and/or the system of any one of the preceding claims, wherein the respective cryogenic coolant jet (20; 22, 24) is a spray jet with an opening angle of at most 60°, advantageously a solid stream spray jet, and the respective cryogenic coolant nozzle (21, 23) is a spray nozzle configured to receive a cryogenic liquid or cryogenic liquid-gas mixture and eject a cryogenic spray jet with an opening angle of at most 60°, advantageously a solid stream spray jet.

## BRIEF DESCRIPTION OF DRAWINGS

The invention is explained below by way of example with reference to figures. Features disclosed there, each individually and in any combination of features, advantageously develop the subjects of the claims and also the embodiments and aspects described above.

FIG. 1 shows a tool head depositing metal on a metal structure and a cooling setup in accordance with the invention in a side view.

FIG. 2 shows the tool head and cooling setup in a top view.

FIG. 3 shows a cooling assembly with a first cryogenic coolant nozzle and a second cryogenic coolant nozzle of a first example embodiment in a top view.

FIG. 4 shows the cooling assembly of the first example embodiment in a side view of the first cryogenic coolant nozzle.

FIG. 5 shows the cooling assembly of the first example embodiment in a side view of the second cryogenic coolant nozzle.

FIG. 6 shows a cooling assembly with a first cryogenic coolant nozzle and a second cryogenic coolant nozzle of a second example embodiment in a top view.

FIG. 7 shows the cooling assembly of the second example embodiment in a side view of the first cryogenic coolant nozzle.

Fig. 8 shows a reference system in which geometric parameters may be measured.

Figure 9 shows upper layers of the metal structure in a perspective.

Figure 10 shows the upper layers of the metal structure in a cross-section.

## DETAILED DESCRIPTION OF THE INVENTION

The ensuing detailed description provides a preferred exemplary embodiment only, and is not intended to limit the scope, applicability, or configuration of the invention. Rather, the ensuing detailed description of the preferred exemplary embodiment will provide those skilled in the art with an enabling description for implementing the preferred exemplary embodiment of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity. The term "and/or" placed between the last two entities of a list of 3 or more entities means at least one of the entities in the list including any specific combination of entities in this list.

In the claims, letters may be used to identify claimed steps, e.g. (a), (b), and (c)). These letters are used to aid in referring to the method steps and are not intended to indicate the order in which claimed steps are performed, unless and only to the extent that such order is specifically recited in the claims.

A "cryogenic fluid" is one that is at a temperature below -70°C and preferably below -100°C, i. e. a temperature low enough to rapidly cool the surface(s) exposed to it. The cryogenic fluid can be any cryogenic fluid or mixture of cryogenic fluids, such as, helium, argon, oxygen, or nitrogen. In preferred embodiments, nitrogen is used. The cryogenic fluid may be a gas, a vapor, a liquid, or a gas-liquid mixture.

In advantageous embodiments, the cryogenic fluid directed towards the new layer may be a spray. Accordingly, the respective cryogenic coolant jet may be a cryogenic spray jet and the respective nozzle may be a cryogenic spray nozzle configured to generate a cryogenic coolant spray jet. If a cryogenic liquid or liquid-gas mixture is used, as preferred, the chosen liquid or mixture is sprayed on the part, and the cooling may occur subsequently by the heat exchange generated through convection by the liquid, change of state from liquid phase to gaseous phase and then convection by the gas. The respective spray jet may have any spray pattern, e.g. a flat fan spray pattern or a conical spray pattern with an opening angle of advantageously at most 60°. In particular, the respective spray jet can have a bar spray pattern and/or be a solid stream jet. The respective cryogenic coolant nozzle is configured to produce the specific spray pattern.

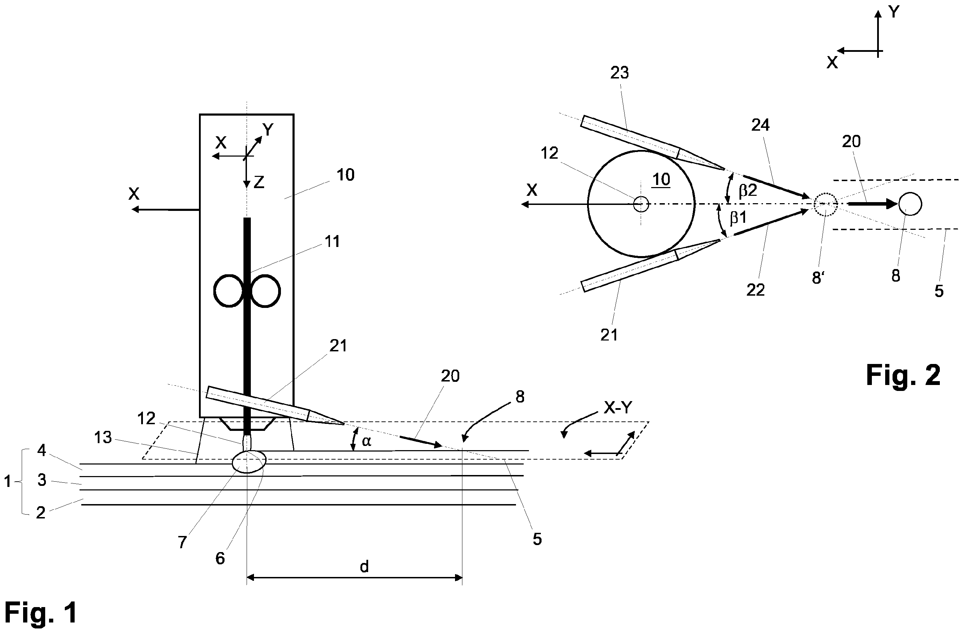

FIG. 1 shows schematically in a side view an example embodiment for the manufacture of a metal structure 1 by direct energy deposition (DED) with a cooling setup according to the invention. For manufacturing, a tool head 10 is moved in an advance direction X on a deposition path to build the metal structure 1 layer by layer by addition of feedstock metal 11. Of the metal structure 1, layers 2, 3 and 4 are shown deposited on top of each other by the tool head 10 in previous passes. In the illustrated pass, the tool head 10 deposits a new layer 5 on the previously deposited layer 4 to build up the metal structure 1.

While being moved in the advance direction X, the tool head 10 supplies feedstock metal 11 in a discharge direction Z towards a melt-pool 7 which advances with the tool head 10 in the local advance direction X of the deposition path. The discharge direction Z may in particular be orthogonal to the advance direction X, as shown for the example embodiment. Energy 12 is directed to an energy input location 6 of the metal structure 1 to create the melt-pool 7.

The metal structure 1 is generated, by way of example, by wire arc additive manufacturing (WAAM). The feedstock metal 11 is accordingly provided in the form of a metal wire and the energy 12 required to melt the feedstock metal 11 is generated by or via the tool head 10 as an electric arc between the tip of the feedstock metal 11 and the opposing melt-pool 7. In so far, a conventional wire arc welding torch can be used as the tool head 10. The energy input location 6 may be defined as a location where a central axis of the arc 12 meets the melt-pool 7.

Tool head 10 may be configured to flood the melt-pool 7 with a shielding gas 13 to shield the melt-pool 7 from the surrounding environment, as for example, from environmental air. Tool head 10 may have a shroud for directing the shielding gas 13 towards the melt-pool 7. For example, helium, argon, $CO_2$, oxygen, and mixtures of those may be used as the shielding gas 13. Alternatively, the metal 11 may be deposited in a closed booth under an inert gas atmosphere, e.g. under argon.

To increase the productivity of the manufacturing process and/or the mechanical quality of the parts produced, cryogenic cooling is provided. The cooling setup comprises a cryogenic coolant nozzle 21 disposed to receive a cryogenic fluid from a cryogenic fluid source, for example, from a reservoir of a compressed and/or liquified cryogenic gas such as nitrogen, oxygen, argon, or helium. The cryogenic fluid may be provided as a gas or, as preferred, as a liquified gas or a mixture of liquid and gas including blends of two or more different elements and/or molecules. The cryogenic coolant nozzle 21, alone or in cooperation with one or more other cryogenic coolant nozzles, is configured to direct a cryogenic coolant jet 20 onto the new layer 5 in a coolant impingement region 8 that trails the melt-pool 7 while the tool head 10 and accordingly the melt-pool 7 advance in the advance direction X. The cryogenic coolant jet 20 may advantageously consist of or at least comprise the cryogenic fluid in the liquid state so that the latent heat of vaporization can be used in the predominantly convective heat exchange with the metal. In principle, however, a cryogenic gas can be used as the coolant instead.

The cryogenic coolant jet 20 may be directed towards the new layer 5 at an acute angle of incidence, $\alpha$. The angle of incidence, $\alpha$, is smaller than 45° and may advantageously fulfill one or more of the following relations:

$$\alpha \leq 30° \text{ or } \alpha \leq 25°, \text{ and/or}$$

$$\alpha > 5° \text{ or } \alpha > 7° \text{ or } \alpha > 10°.$$

The angle of incidence, $\alpha$, may even more advantageously be chosen to be in a range from 10° to 30°, including the limits.

The angle of incidence, $\alpha$, may be measured as the angle between a central axis of the cryogenic coolant jet 20 and a reference plane X-Y which is tangential to the new layer 5. The reference plane X-Y is spanned by the advance direction X and a transverse direction Y which is orthogonal to the advance direction X and to the directional component of the discharge direction Z which is orthogonal to the advance direction X.

Directing the cryogenic coolant jet 20 under a small angle of incidence, $\alpha$, towards the top surface of the new layer 5 allows the cryogenic coolant nozzle 21 to be located close to the discharge end of the tool head 10 where the feedstock metal 11 is discharged from the tool head 10. The cryogenic fluid can be ejected at a location close to the new layer 5, while still avoiding interference with the shielding gas 13 and/or the arc 12, and in this sense the cryogenic coolant jet 20 can be decoupled from the arc 12 and/or the shielding gas 13. The cryogenic fluid is ejected with a momentum that is greater against the advance direction X than in the discharge direction Z. The cryogenic fluid may be ejected with a momentum that is predominantly directed against the advance direction X. The cryogenic coolant jet 20 is directed onto the new layer 5 at a trailing distance, d, from the energy input location 6, wherein the trailing distance, d, may be smaller than 120 mm or smaller than 80 mm or smaller than 60 mm. In trials, the trailing distance, d, could be reduced to below 50 mm.

FIG. 2 shows the tool head 10 and the cooling setup schematically in a top view. Of the metal structure 1, only the new layer 5 is indicated by dashed lines. The cooling setup comprises a first cryogenic coolant nozzle 21, which is the cryogenic coolant nozzle also shown in Figure 1, and a second cryogenic coolant nozzle 23 disposed to receive cryogenic fluid from the cryogenic fluid source from which the first cryogenic coolant nozzle 21 is also supplied. The first cryogenic coolant nozzle 21 is disposed to direct a first cryogenic coolant jet 22 towards the new layer 5 and the second cryogenic coolant nozzle 23 is disposed to direct a second cryogenic coolant jet 24 of the cryogenic fluid towards the new layer 5. The cryogenic coolant nozzles 21 and 23 are disposed to direct the respective cryogenic coolant jet 22 and 24 counter the advance direction X and with a directional component to each other in the top view to combine and form the resultant cryogenic coolant jet 20 as a combined cryogenic coolant jet.

The first cryogenic coolant jet 22 has a central jet axis defined by the first cryogenic coolant nozzle 21, which includes a crossing angle $\beta1$ with the advance direction X. The second cryogenic coolant jet 24 has a central jet axis defined by the second cryogenic coolant nozzle 23 and includes a second crossing angle $\beta2$ with the advance direction X. The alignment of the cryogenic coolant jets 22 and 24 with respect to each other counteracts fanning out, so that the combined cryogenic coolant jet 20 can be better confined to the new layer 5.

The respective cryogenic coolant jet 22 and 24 is represented by its central jet axis which may coincide with a central longitudinal axis of the cryogenic coolant nozzle 21 and 23 that produces the respective jet 22 and 24. The cryogenic coolant jets 22 and 24 include an angle, the sum $\beta1 + \beta2$, which may satisfy one or more of the following relations:

$$(\beta1 + \beta2) > 20° \text{ or } (\beta1 + \beta2) > 30°$$

and/or

$$(\beta1 + \beta2) < 120° \text{ or } (\beta1 + \beta2) \leq 90°.$$

With respect to the advance direction X, the crossing angles $\beta1$ and $\beta2$ may satisfy one or more of the following relations:

$$\beta1 > 10° \text{ or } \beta1 > 20°$$

and/or

$$\beta2 > 10° \text{ or } \beta2 > 20°$$

and/or

$$\beta1 < 60° \text{ or } \beta1 < 50°$$

and/or

$$\beta2 < 60° \text{ or } \beta2 < 50°.$$

The cryogenic coolant jets 22 and 24 are directed towards the new layer 5 each at the acute angle of incidence, $\alpha$. The angle included by the two jets 22 and 24 and also the crossing angle between the advance direction X and the respective jet 22 and 24 may be measured in a measurement plane spanned by the central axes of the cryogenic coolant jets 22 and 24. With respect to the advance direction X, the individual crossing angle $\beta1$ and/or $\beta2$ may be measured as the angle which the respective central jet axis includes with an orthogonal parallel projection of the advance direction X into this measurement plane. One or more of the above relations for $\beta1$ and/or $\beta2$ may be satisfied in the measurement plane. As a substitute, the angle included by the two jets 22 and 24 and also the crossing angles $\beta1$ and $\beta2$ between the advance direction X and the respective jet 22 and 24 may be measured in the top view of the new layer 5 and/or in the top view of the reference plane X-Y. The smaller the angle of incidence, $\alpha$, the better the approximation to the measurement in the measurement plane.

The cryogenic coolant jets 22 and 24 may be directed toward each other such that their central axes intersect at a distance from the new layer 5, i.e., a distance orthogonal to the reference plane X-Y. The central axes need not intersect each other either. The beneficial effect of counteracting fanning can also be achieved if the central axes cross at a small distance from each other, provided that the cryogenic coolant jets 22 and 24 combine to form the combined cryogenic coolant jet 20.

In the Figures 1 and 2 the cryogenic coolant jets 22 and 24 combine and only the resultant combined cryogenic coolant jet 20 impinges on the new layer 5. Alternatively, and particularly advantageously, the cryogenic coolant nozzles 21 and 23 may be oriented so that the cryogenic coolant jets 22 and 24 combine when they strike the new layer 5, preferably the top surface of the new layer 5. In such embodiments, the cryogenic coolant nozzles 21 and 23 may be aligned so that their central axes do not intersect until they reach the impingement region 8 or may intersect so close to the new layer 5 that the resulting combined jet 20 is formed immediately in contact with the new layer 5. The alternative is indicated by a dashed circle 8' in Figure 2.

The cryogenic coolant nozzles 21 and 23 may be coupled to the tool head 10 such that they follow the movements of the tool head 10. They may be immovably coupled to the tool head 10. In particular, they may be mounted on the tool head 10. With respect to the advance direction X, the first cryogenic coolant nozzle 21 and/or a conduit connecting the cryogenic coolant nozzle 21 to a cryogenic fluid source may be arranged to the left and the second cryogenic coolant nozzle 23 and/or a conduit connecting the cryogenic coolant nozzle 23 to a cryogenic fluid source may be arranged to the right of the tool head 10, with their nozzle outlets pointing counter to the advance direction X and, in advantageous embodiments, their central axes enclosing the angle $\beta1 + \beta2$ with each other. By arranging the cryogenic coolant nozzles 21 and 23 and/or conduits connecting the cryogenic coolant nozzles 21 and 23 to a cryogenic fluid source to the left and right of the tool head 10, the nozzle outlets can be located close to the energy input region 6 with respect to the advance direction X, which in turn contributes to a reduction in the trailing distance, d. The trailing distance, d, can also be reduced by placing the respective cryogenic coolant nozzle 21 and 23 close to the discharge end of the tool head 10, measured in discharge direction Z. In this way, active cooling can already start at high temperatures of the metal. Also, the free distance covered by the respective cryogenic coolant jet 22 or 24 or 20 until impingement can be kept short. The shorter the free distance, the more precisely the respective cryogenic coolant jet 22 or 24 or 20 is defined when it strikes the new layer 5 and/or when the coolant jets 22 and 24 meet.

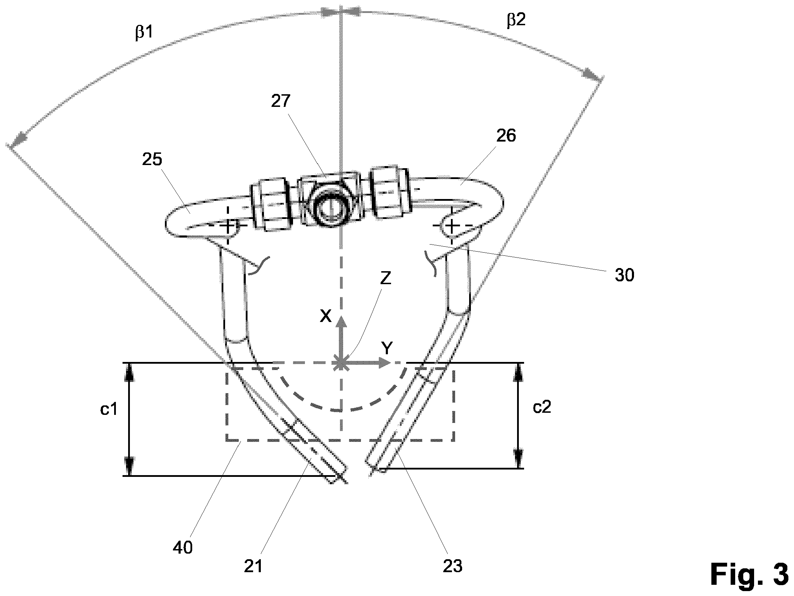

Figure 3 illustrates a first example embodiment of a cooling assembly comprising the cryogenic coolant nozzles 21 and 23 in a top view of the reference plane X-Y. The tool head 10 is not shown. Shown, however, is part of a nozzle mount 30 fitted to the tool head 10. The nozzle mount 30 may be removably attached to the tool head 10. The tool head 10 is not shown as such, but is represented by the X, Y, and Z coordinate system, with the Z axis representing a central axis of the tool head 10. The central axis Z may coincide with the discharge direction Z, at least in embodiments in which the tool head 10 is configured to discharge only a single wire of feedstock metal 11.

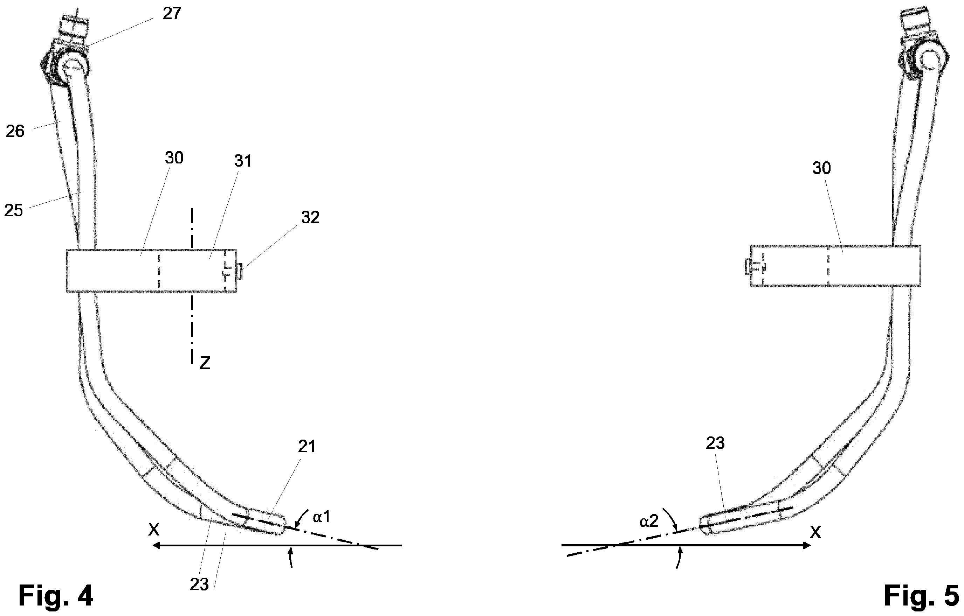

The nozzle mount 30 holds and positions the cryogenic coolant nozzles 21 and 23 relative to the tool head 10 and to each other. The nozzle mount 30 may comprise a passageway 31 for the tool head 10, as shown in Figures 4 and 5. In the assembled state, the tool head 10 may protrude through the passageway 31 and be clamped, for example, by means of one or more clamping screws 32 (cf. Figures 4 and 5). The nozzle mount 30 may comprise a first positioning feature for holding and positioning the first cryogenic coolant nozzle 21 and a second positioning feature for holding and positioning the second cryogenic coolant nozzle 23.

The positioning features may be provided each in the form of a passageway through the nozzle mount 30. A conduit 25 for connecting the first cryogenic coolant nozzle 21 to the cryogenic fluid source and a conduit 26 for connecting the second cryogenic coolant nozzle 23 to the cryogenic liquid source may be fixed to the nozzle mount 30, whereby the cryogenic coolant nozzles 21 and 23 are held in their respective positions relative to the nozzle munt 30, and ultimately to the tool head 10 when clamped in the passageway of the nozzle mount 30. Conduits 25 and 26 may branch from a manifold 27 through which the cooling assembly may be connected to the cryogenic fluid source.

The cooling assembly may comprise a positioning and barrier structure 40, as indicated by dashed lines, to which the cryogenic coolant nozzles 21 and 23 are fixedly connected near the respective nozzle outlet to increase the precision with which the cryogenic coolant nozzles 21 and 23 are positioned and aligned relative to each other and to the tool head 10. In addition, it has been found that a physical structure extending between the nozzles 21 and 23, preferably directly below the nozzles, improves the flow stability of the cryogenic coolant exiting the nozzles 21 and 23.

Figure 3 shows further features of the cooling setup that can be implemented individually or in any combination. For example, the crossing angles $\beta1$ and $\beta2$ can be equal or differ from each other. In the first example embodiment of the cooling assembly $\beta1 > \beta2$. The crossing angle $\beta1$ can be advantageously selected from the range of 10° to 50° and $\beta2$ from the range of 20° to 60° including the limit values. $\beta1$ and $\beta2$ may differ from each other, for example, by more than 3° or more than 5°. A difference between $\beta1$ and $\beta2$ may advantageously be less than 20°.

As can also be seen in Figure 3, the outlet of the first cryogenic coolant nozzle 21 may be offset from the outlet of the second cryogenic coolant nozzle 23 in the advance direction X. In the first example embodiment, the outlet of the first cryogenic coolant nozzle 21 is offset against the advance direction X by a distance $c1$ from the central axis of the tool head 10, which is represented in Figure 3 by a central axis of the passage 33 of the nozzle holder 30. And the outlet of the second cryogenic coolant nozzle 23 is offset against the advance direction X by a distance $c2$ from the central axis of the tool head 10. In the mounted state, the distances $c1$ and $c2$ can be measured in relation to the central axis of the arc 12.

Figures 4 and 5 are side views of the cooling assembly of the first example embodiment, figure 4 showing the cooling assembly in a view of the first cryogenic coolant nozzle 21 and figure 5 showing the cooling assembly in a view of the second cryogenic coolant nozzle 23. The cooling assembly, in particular the cryogenic coolant nozzles 21 and 23, is/are shown in an orientation corresponding to a preferred orientation during operation. The advance direction X and the central axis Z of the arc 12, which coincides with the discharge direction Z for the metal 11, are also shown. The first cryogenic coolant nozzle 21 is pointing against the advance direction X and is inclined to the advance direction X under a first angle of incidence $\alpha 1$. The second nozzle 23 is pointing counter to the advance direction X and is inclined to the advance direction X under a second angle of incidence $\alpha 2$. The angles of incidence, $\alpha 1$ and $\alpha 2$, may be identical or, as in the first embodiment of the cooling assembly, may differ from each other. The angles of incidence, $\alpha 1$ and $\alpha 2$, are each smaller than 45° and may each be 30° or smaller. On the other hand, $\alpha 1$ and $\alpha 2$ are each greater than 0° and may each be greater than 5° or greater than 8°. Angles of incidence, $\alpha 1$ and $\alpha 2$, in the range from 10° to 30° are most advantageous. $\alpha 1$ may differ from $\alpha 2$ by more than 0.5° or even more than 1°. In the first example embodiment, $\alpha 1 > \alpha 2$.

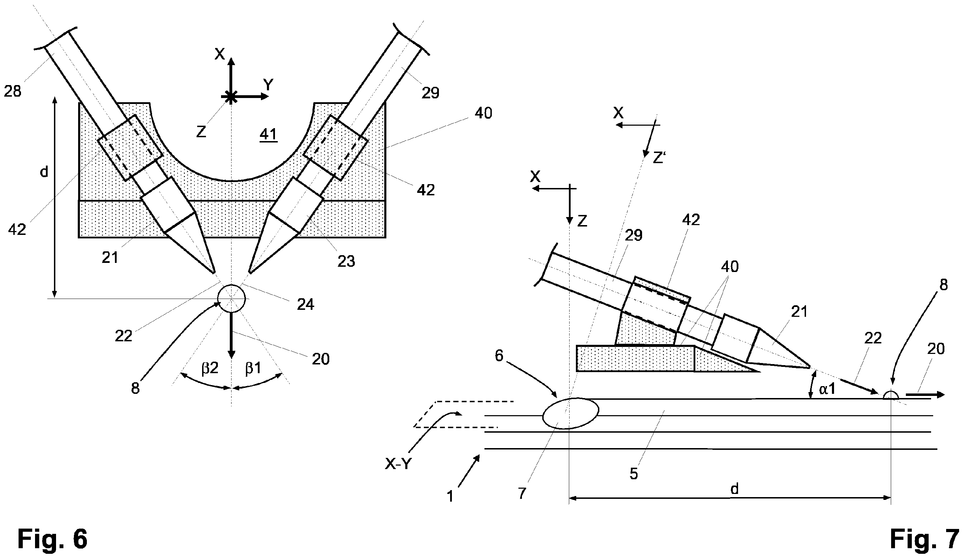

Figures 6 and 7 show a cooling assembly of a second example embodiment in a top view and a side view. The cooling assembly of the second embodiment comprises the first cryogenic coolant nozzle 21 and the second cryogenic coolant nozzle 23, which are symmetrically aligned with respect to a plane of symmetry X-Z spanned by the advance direction X and the discharge direction Z. The crossing angle $\beta 1$ of the first cryogenic coolant nozzle 21 and the crossing angle $\beta 2$ of the second cryogenic coolant nozzle 23 are accordingly equal. The angles of incidence, $\alpha 1$ and $\alpha 2$, are also the same for both nozzles 21 and 23. In Figure 7, the angle of incidence $\alpha 1$ of the first cryogenic coolant nozzle 21 is also representative of the angle of incidence $\alpha 2$ of the second cryogenic coolant nozzle 23.

The cooling assembly of the second embodiment comprises a nozzle mount configured to be mount on the tool head 10. The nozzle mount 30 of the first example embodiment (cf. Figures 3 to 5) may also be used in the second example embodiment. Figures 6 and 7 illustrate a positioning and barrier structure 40 that can also be used in the first embodiment of the cooling device.

The positioning and barrier structure 40 bridges a space between the cryogenic coolant nozzles 21 and 23 to separate the cryogenic coolant jets 22 and 24 from the shielding gas 13, and vice versa. The positioning and barrier structure 40 may extend in a direction Y transverse to the advance direction X between the cryogenic coolant nozzles 21 and 23 and/or in discharge direction Z below the cryogenic coolant nozzles 21 and 23. The positioning and barrier structure 40 forms a barrier between the cryogenic coolant nozzles 21 and 23 on the one hand and the shielding gas 13 on the other hand. It may extend into the vicinity of the tool head 10 and, for improving the barrier function, may comprise a recess 41 that matches the peripheral contour of the tool head 10 and forms a narrow gap with the tool head 10.

The cryogenic coolant nozzles 21 and 23 are each fixed to the positioning and barrier structure 40 by means of fasteners 42. The fasteners 42 may be integrally formed with or joined to the positioning and barrier structure 40. The fasteners 45 may each comprise a passageway for a conduit end section connecting the cryogenic coolant nozzles 21 and 23 to the cryogenic fluid source. The first cryogenic coolant nozzle 21 may be connected to a first conduit end section 28 extending through one of the fasteners 42 and the second cryogenic coolant nozzle 23 may be connected to a second conduit end section 29 extending through the other fastener 42. The passageway of the respective fastener 42 may be internally threaded and the respective conduit end portion 28 and 29 may be externally threaded for threaded engagement with the respective fastener 42. The fasteners 42 may be aligned such that the cryogenic coolant nozzles 21 and 23 are properly aligned with respect to each other and with respect to the tool head 10 when the nozzle holder 40 is mounted to the tool head 10. The first conduit end section 28 may extend from first cryogenic coolant nozzle 21 in a longitudinally straight line coaxial with the first cryogenic coolant jet 22. The second conduit end section 29 may extend from second cryogenic coolant nozzle 23 in a longitudinally straight line coaxial with the second cryogenic coolant jet 24. The first conduit end section 28 may be an integral part of the cryogenic coolant nozzle 21, and the second conduit end section 29 may be an integral part of the cryogenic coolant nozzle 23.

In Figure 2, the crossing angles $\beta 1$ and $\beta 2$ are selected from the range of 20° to 30°, and in Figure 6, from the range of 30° to 40°, each including the limit values. The nozzle outlets of cryogenic coolant nozzles 21 and 23 are close together in the transverse direction Y. The transverse distance between the outlets of the cryogenic coolant nozzles 21 and 23 may be less than 50 mm or, as is preferred, less than 40 mm or less than 30 mm so that the cryogenic coolant jets 22 and 24 combine close to the cryogenic coolant nozzles 21 and 23 and the energy input location 6.

In a modification, the fasteners 42 may each be arranged further outwardly, i.e., at a greater transverse distance from each other, and the cryogenic coolant nozzles 21 and 23 may be rotated so that their nozzle outlets point even more in the direction of the plane of symmetry X-Z. In the modification, the cryogenic coolant jets 22 and 24 have an increased crossing angle $\beta 1$ and $\beta 2$, respectively, to the advance direction (X). The respective crossing angle $\beta 1$ and $\beta 2$ can be up to 45° or even up to 50°. The area where the cryogenic coolant jets 22 and 24 meet can be moved closer to the nozzle outlets in the advance direction X or further away from the nozzle outlets in the direction opposite to the advance direction X by changing the transverse distance between the nozzle outlet of the first cryogenic coolant nozzle 21 and the nozzle outlet of the second cryogenic coolant nozzle 23 and/or by changing the crossing angles $\beta 1$ and $\beta 2$. The trailing distance, d, can accordingly be decreased or increased.

Figure 7 and also Figure 1 show a manufacturing setup in which the tool head 10 is held in a position in which the discharge direction Z points orthogonally to the top surface of the metal structure 1. X-Y denotes a virtual reference plane which is tangential to the top surface of the metal structure 1. When the deposition path is a horizontal path, as is typical with DED, the reference plane X-Y is a horizontal plane. The discharge direction Z may advantageously be orthogonal to the reference plane X-Y and thus to the top surface of the metal structure 1. However, this is not necessarily the case. The discharge direction Z could instead be inclined with respect to the reference plane X-Y and the advance direction X. This is indicated in figure 7 by the inclined discharge direction Z'. When the tool head 10 is moved in tilted orientation Z' in the feed direction X, it pushes forward while depositing the new layer 5 on the metal structure 1. The cryogenic coolant nozzles 21 and 23 may be mounted in an appropriately tilted or adjustable arrangement with respect to the tool head 10 so that the angles of incidence $\alpha 1$ and $\alpha 2$ are maintained.

In operation, the mass flow rate through the first cryogenic coolant nozzle 21 may differ from the mass flow rate through the second cryogenic coolant nozzle 23. In expedient embodiments, however, the mass flow rates through the nozzles 21 and 23 are the same.

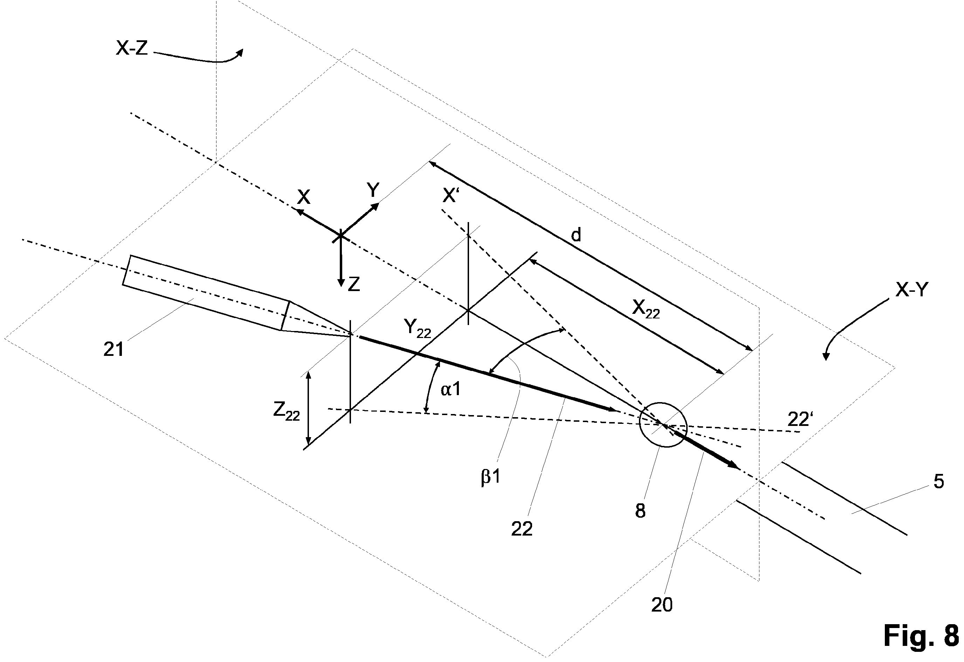

Fig. 8 illustrates a reference system in which the respective angle of incidence, $\alpha$, $\alpha 1$, and $\alpha 2$, and the respective crossing angle, $\beta 1$ and $\beta 2$, and also the trailing distance, d, may be measured. The advance direction X, the discharge direction Z, and the transverse direction Y are orthogonal to each other and define a Cartesian coordinate system, which in Figure 8 is positioned so that its Z axis points in the direction of the melt-pool 7, which is not drawn in Figure 8 (cf. Figures 1 and 7). The advance direction X and the transverse direction Y span the reference plane X-Y which is tangential to the new layer 5. The advance direction X and the discharge Z span a central X-Z plane that extends centrally through the tool head 10. Should the discharge direction Z be oblique to the advance direction X, the discharge direction Z is substituted by its directional component that is orthogonal to the advance direction X.

The first cryogenic coolant nozzle 21 and its central longitudinal axis representative of the first cryogenic coolant jet 22 are shown. The cryogenic coolant nozzle 21 points towards the reference plane X-Y at the acute angle of incidence, $\alpha 1$. The angle of incidence, $\alpha 1$, is the angle between the central longitudinal axis of the cryogenic coolant nozzle 21 and thus of the cryogenic coolant jet 22 and the reference plane X-Y. It may be measured in a plane which is orthogonal to the reference plane X-Y and in which the central axis of the cryogenic coolant jet 22 extends.

The second cryogenic coolant nozzle 23 is arranged to the other side of the central X-Z plane, but is omitted for simplicity, especially since the arrangement may be symmetrical about the central X-Z plane, such as in the second example embodiment. However, the measurement plane spanned by the central axis of the first cryogenic coolant jet 22 and the central axis of the second cryogenic coolant jet 24 is shown. To measure the crossing angle, $\beta 1$, and also the crossing angle, $\beta 2$, of the not shown second cryogenic coolant jet 24, the advance direction X is projected orthogonally parallel in the central X-Z plane into the measurement plane. This orthogonal parallel projection of the advance direction X is also the intersection line of the central X-Z plane with the measurement plane and is designated X' in Figure 8.

Each of the cryogenic coolant jets 22 and 24 has a momentum with directional components in all three directions of the reference system, namely a directional component against the advance direction X, a directional component in the discharge direction Z, and a transverse directional component pointing toward the central X-Z plane. The intersection line of the reference plane X-Y and the central X-Z plane is representative of a centerline of the deposition path. The directional components of the cryogenic coolant jet 22 are shown. These are the directional component $X_{22}$ against the advance direction X, the directional component $Z_{22}$ in the discharge direction Z, and the transverse directional component $Y_{22}$ pointing toward the central X-Z plane. The component $Z_{22}$ in the discharge direction Z is smaller than the component $X_{22}$ against the advance direction X so that splashing back of the cryogenic fluid to the energy input location 6 (cf. Figures 1 and 6) can be neglected or avoided altogether. In addition, the distance over which the cryogenic fluid is in heat exchange with the new layer 5 can be extended. The directional component $X_{22}$ against the advance direction X can not only be larger than $Z_{22}$, but also than $Y_{22}$. In principle, however, the transverse component $Y_{22}$ can also be larger than $X_{22}$.

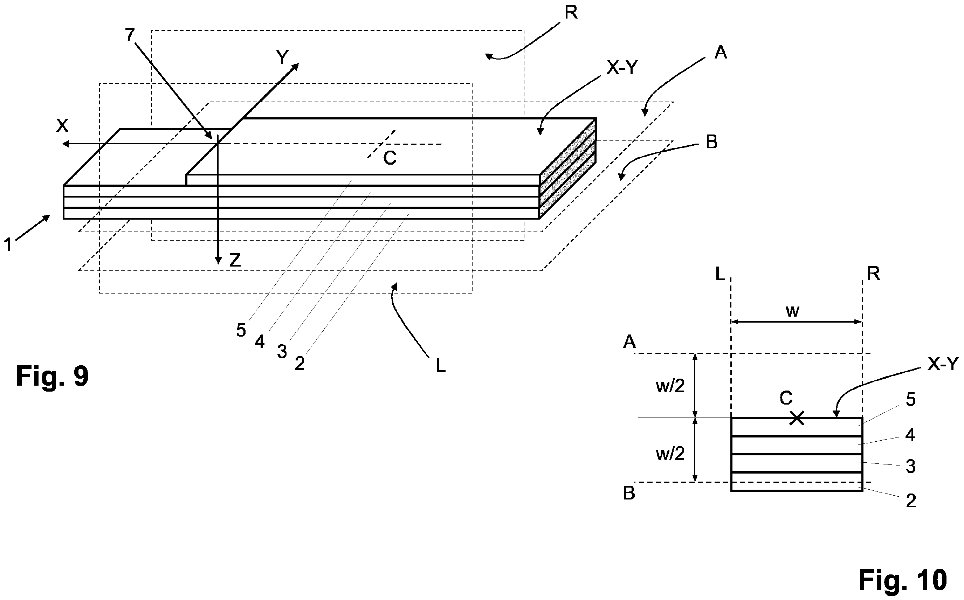

In Figures 9 and 10, the upper layers 2 to 5 of the metal structure 1 are shown as thin rectangular strips, which is only a first approximation to their shape in the real process. The advance direction X, the discharge direction Z and the transverse direction Y define a Cartesian coordinate system, which in Figure 9 is positioned at the melt-pool 7. The plane L is orthogonal to the reference plane X-Y and tangential to the outer left side rim of the new layer 5. Plane R is tangential to the outer right side rim of the new layer 5 and parallel to plane L. A width, w, of the new layer 5 corresponds to the distance between the planes L and R. In addition, virtual planes A and B are shown, both of which extend parallel to the reference plane X-Y, one above and the other below the reference plane X-Y. The planes L, R, A and B can be used to define a cube which has side walls with side length w and a cube center C, whereby the cube center C is located in the reference plane X-Y in the middle between the planes L and R in a top view of the reference plane X-Y. The cube also has a front wall and a rear wall that extend in the discharge direction Z and the transverse direction Y. This cube virtually trails the melt-pool 7 when the tool head moves in the advance direction X to produce the new layer 5.

In expedient embodiments, a central axis of the first cryogenic coolant jet 22 and a central axis of the second cryogenic coolant jet 24 may intersect or cross within the virtual cube just defined. Advantageously, the two central jet axes may intersect on the new layer 5 or intersect or cross within the virtual cube at a location no more than w/2 from the surface of the new layer 5 facing the coolant jets 22 and 24. The two central jet axes may intersect or cross midway between the outer left side rim and the outer right side rim of the new layer 5.

**Claims**

1. A method for direct energy deposition of metal, for example, for wire arc additive manufacturing (WAAM), the method comprising:

   (a) moving a tool head (10) and/or a metal structure (1) one relative to the other so that the tool head (10) moves relative to the metal structure (1) in an advance direction (X) on a deposition path along the metal structure (1);
   (b) directing energy (12) to an energy input location (6) of the metal structure (1) to create a melt-pool (7) that moves in the advance direction (X) along the deposition path;
   (c) supplying a feedstock metal (11) from the tool head (10) in a discharge direction (Z) directed toward the advancing melt-pool (7) to deposit a new layer (5) of metal on the structure (1); and
   (d) directing one or more cryogenic coolant jets (20; 22, 24) of cryogenic fluid with a directional component counter to the advance direction (X) towards the new layer (5) so that the cryogenic fluid impinges on the new layer (5) in a coolant impingement region (8) trailing the melt-pool (7) in the advance direction (X);
   (e) wherein the respective cryogenic coolant jet (20; 22, 24) is directed towards the new layer (5) at an angle of incidence ($\alpha$; $\alpha1$, $\alpha2$) to a reference plane (X-Y) which is tangential to the new layer (5) and perpendicular to a directional component of the discharge direction (Z) which is orthogonal to the advance direction (X), wherein the angle of incidence ($\alpha$; $\alpha1$, $\alpha2$) of the respective cryogenic coolant jet (20; 22, 24) is smaller than 45°.

2. The method according to the preceding claim, wherein the angle of incidence ($\alpha$; $\alpha1$, $\alpha2$) of the respective cryogenic coolant jet (20; 22, 24) is at most 30° or at most 25° and/or wherein the angle of incidence ($\alpha$; $\alpha1$, $\alpha2$) of the respective cryogenic coolant jet (20; 22, 24) is greater than 5° or is at least 10°.

3. The method according to any one of the preceding claims, wherein the cryogenic fluid impinges on the new layer (5) at a distance, d, from the energy input location (6), wherein d < 120 mm or d < 80 mm or d < 60 mm.

4. The method according to any one of the preceding aspects, wherein the one or more cryogenic coolant jets comprise a first cryogenic coolant jet (22) of cryogenic fluid and a second cryogenic coolant jet (24) of cryogenic fluid each directed counter the advance direction (X), and wherein at least one of the first cryogenic coolant jet (22) and the second cryogenic coolant jet (24) has a directional component in a direction (Y) transverse to the advance direction (X) such that the first cryogenic coolant jet (22) and the second cryogenic coolant jet (24) are directed to each other and combine to form a combined cryogenic coolant jet (20) which is in heat transfer contact with the new layer (5).

5. The method according to the preceding claim, wherein the first cryogenic coolant jet (22) and the second cryogenic coolant jet (24) are aligned so that they combine when they impinge on the new layer (5) or combine so close to the new layer (5) that the resulting combined cryogenic coolant jet (20) is formed immediately in contact with the new layer (5).

6. The method according to claim 4 or claim 5, wherein the first cryogenic coolant jet (22) is directed towards the new layer (5) at a first crossing angle ($\beta1$) to the advance direction (X) and/or the second cryogenic coolant jet (24) is directed towards the new layer (5) at a second crossing angle ($\beta2$) to the advance direction (X), wherein the first cryogenic coolant jet (22) and the second cryogenic coolant jet (24) include an angle ($\beta1 + \beta2$) greater than 20° and less than 120° or of at most 90° in in a top view of the new layer (5) and/or in a measurement plane spanned by the first cryogenic coolant jet (22) and the second cryogenic coolant jet (24).

7. The method according to any one of the claims 4 to 6, wherein the first cryogenic coolant jet (22) is directed towards the new layer (5) at a first angle of incidence, $\alpha1$, to the reference plane (X-Y) and the second cryogenic coolant jet (24) is directed towards the new layer (5) at a second angle of incidence, $\alpha2$, to the reference plane (X-Y), wherein $\alpha1$ and $\alpha2$ are each greater than 0° and less than 45°, wherein $\alpha1$ and $\alpha2$ are each preferably at most 30° or at most 25°.

8. The method according to any one of the preceding claims, wherein a shielding gas (13) is applied around and/or onto the melt-pool (7) to shield the melt-pool (7) from the surrounding environment.

9. An apparatus for direct energy deposition of metal, for example, for wire arc additive manufacturing (WAAM), the apparatus comprising:

(a) a tool head (10) having a discharge end and configured to supply a feedstock metal (11) at the discharge end in a discharge direction (Z);
(b) an energy source configured to generate an arc (12) or energy beam to melt the feedstock metal (11) from the tool head (10); and
(c) one or more cryogenic coolant nozzles (21, 23) configured to generate a respective cryogenic coolant jet (22, 24), preferably spray jet (22, 24), of cryogenic fluid and coupled to the tool head (10), preferably mounted on the tool head (10), so that the respective cryogenic coolant nozzle (21, 23) moves together with the tool head (10) when the tool head (10) is moved in an advance direction (X) to deposit the feedstock metal (11);
(d) wherein the respective cryogenic coolant nozzle (21, 23) is directed against the advance direction (X) and points under an acute angle of incidence ($\alpha$1, $\alpha$2) greater than 0° and less than 45° to a reference plane (X-Y) when the tool head (10) is oriented such that the discharge direction (Z) is orthogonal to the reference plane (X-Y) or points in the advance direction (X) and to the reference plane (X-Y).

10. The apparatus according to the preceding claim, wherein the angle of incidence ($\alpha$1, $\alpha$2) of the respective cryogenic coolant nozzle (21, 23) is at most 30° or at most 25° and/or wherein the angle of incidence ($\alpha$1, $\alpha$2) of the respective cryogenic coolant nozzle (21, 23) is greater than 5° or is at least 10°.

11. The apparatus according to claim 9 or claim 10, comprising a nozzle mount (30, 40) mounted on the tool head (10) and holding the respective cryogenic coolant nozzle (21, 23) in a defined position and orientation relative to the tool head (10).

12. The apparatus according to any one of the claims 9 to 11, comprising a barrier structure (40) coupled to the tool head (10) so that it moves together with the tool head (10) when the tool head (10) is moved in the advance direction (X), wherein the barrier structure (40) extends below the respective cryogenic coolant nozzle (21, 23) with respect to the discharge direction (Z) and/or between respective cryogenic coolant nozzles (21, 23) to provide a physical barrier between the cryogenic coolant jet (22, 24) of the respective cryogenic coolant nozzle (21, 23) and a shielding gas, if the tool head (10) comprises a shielding gas discharger, and/or between the cryogenic coolant jet (22, 24) of the respective cryogenic coolant nozzle (21, 23) and the discharge end of the tool head (10).

13. The apparatus according to any one of the claims 9 to 12, wherein the one or more cryogenic coolant nozzles (21, 23) comprise a first cryogenic coolant nozzle (21) configured to generate a first cryogenic coolant jet (22) of a cryogenic fluid and a second cryogenic coolant nozzle (23) configured to generate a second cryogenic coolant jet (24) of a cryogenic fluid; and wherein the first cryogenic coolant jet (22) and the second cryogenic coolant jet (24) are directed with a directional component to each other, preferably in a top view of the reference plane (X-Y), to combine the first cryogenic coolant jet (22) and the second cryogenic coolant jet (24) and form a combined cryogenic coolant jet (20).

14. The apparatus according to the preceding claim, wherein the first cryogenic coolant nozzle (21) points at a first crossing angle ($\beta$1) to the advance direction (X) and/or the second cryogenic coolant nozzle (23) points at a second crossing angle ($\beta$2) to the advance direction (X), wherein the respective crossing angle ($\beta$1, $\beta$2) is greater than 10° or greater than 20° and is less than 60° or less than 50°, and wherein the respective crossing angle ($\beta$1, $\beta$2) is measured in a top view of the reference plane (X-Y) and/or in a measurement plane spanned by a central axis of the first cryogenic coolant nozzle (21) and a central axis of the second cryogenic coolant nozzle (23) and is measured in this measurement plane as the angle included by the central axis of the respective cryogenic coolant nozzle (21, 23) and an orthogonal parallel projection (X') of the advance direction (X),

15. The apparatus according to claim 13 or claim 14, wherein the first cryogenic coolant nozzle (21) is disposed to the right and the second cryogenic coolant nozzle (23) is disposed to the left of a virtual plane (X-Z) which is spanned by the advance direction (X) and the discharge direction (Z) and extends through the tool head (10).

Fig. 2

Fig. 1

Fig. 3

**Fig. 4**

**Fig. 5**

Fig. 7

Fig. 6

**Fig. 8**

Fig. 10

Fig. 9

Europäisches
Patentamt

European
Patent Office

Office européen
des brevets

## EUROPEAN SEARCH REPORT

**Application Number**

EP 24 15 8179

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/002563 A2 (NORSK TITANIUM AS [NO]; MATHISEN MARTIN BORLAUG [NO] ET AL.) 3 January 2019 (2019-01-03) | 1,2,4-15 | INV. B22F10/22 B22F10/25 |
| A | * paragraphs [0034], [0062], [0068], [0081], [0092], [0114], [0115]; figures 1, 2, 7-9 * | 3 | B22F10/322 B22F12/20 B23K37/00 B23K9/04 |
| | ----- | | B23K9/16 |
| X | US 2023/381898 A1 (SIEWERT ERWAN [DE]) 30 November 2023 (2023-11-30) | 1,2,4-15 | |
| A | * paragraphs [0021], [0023], [0024], [0053]; figures 3, 4 * | 3 | |
| | ----- | | |

TECHNICAL FIELDS
SEARCHED (IPC)

C22C
B22F
B23K

The present search report has been drawn up for all claims

| Place of search | Date of completion of the search | Examiner |
|---|---|---|
| Munich | 8 August 2024 | Serbescu, Anca |

EPO FORM 1503 03.82 (P04C01)

**ANNEX TO THE EUROPEAN SEARCH REPORT
ON EUROPEAN PATENT APPLICATION NO.**                    EP 24 15 8179

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2024

| Patent document cited in search report | Publication date | Patent family member(s) | | Publication date |
|---|---|---|---|---|
| WO 2019002563 A2 | 03-01-2019 | AU | 2018294544 A1 | 13-02-2020 |
| | | CA | 3068566 A1 | 03-01-2019 |
| | | CN | 111032254 A | 17-04-2020 |
| | | EP | 3645195 A2 | 06-05-2020 |
| | | JP | 7253864 B2 | 07-04-2023 |
| | | JP | 2020527462 A | 10-09-2020 |
| | | KR | 20200024861 A | 09-03-2020 |
| | | SG | 11201913172R A | 30-01-2020 |
| | | WO | 2019002563 A2 | 03-01-2019 |
| US 2023381898 A1 | 30-11-2023 | AU | 2021359800 A1 | 25-05-2023 |
| | | CN | 116234657 A | 06-06-2023 |
| | | EP | 3984678 A1 | 20-04-2022 |
| | | EP | 4228846 A1 | 23-08-2023 |
| | | US | 2023381898 A1 | 30-11-2023 |
| | | WO | 2022078625 A1 | 21-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220008995 A1